# EUROPEAN PATENT APPLICATION

(11) **EP 4 794 056 A1**
(43) Date of publication of application: **19.08.2026**
(21) Application number: 25223639.3
(22) Date of filing: 16.12.2025
(51) Int. Cl.: H01M 10/613, H01M 10/6553, H01M 50/176, H01M 50/55, H01M 50/553

(54) **RECHARGEABLE BATTERY AND BATTERY MODULE**

(30) Priority: 13.02.2025 KR 20250018964
(71) Applicant: SAMSUNG SDI CO., LTD., Yongin-si, Gyeonggi-do 17084 (KR)
(72) Inventor: GUEN, Minhyung, 17084 Yongin-si, Gyeonggi-do (KR)
(74) Representative: Gulde & Partner

(57) **Abstract**

A rechargeable battery (200) includes an electrode assembly (150), and a cap plate (120) defining a terminal hole, a pair of terminals (130, 140) connected with the electrode assembly (150), one of the terminals (130, 140) including a rivet terminal (50) in the terminal hole with a seal gasket (40) between the rivet terminal (50) and the cap plate (120), a terminal plate (60) coupled to the rivet terminal (50), surrounding a part of the rivet terminal (50) at an exterior of the cap plate (120), and having an air layer (80) therein, and an insulator (70) between the cap plate (120) and the terminal plate (60), and overlapping the air layer (80) in a thickness direction of the cap plate (120).

## Description

### BACKGROUND

### 1. Field

The present disclosure relates to a rechargeable battery equipped with a pair of terminals, and a battery module including a plurality of rechargeable batteries.

### 2. Description of the Related Art

A battery module may include a plurality of rechargeable batteries, and a plurality of bus bars that connect the plurality of rechargeable batteries in series and/or in parallel. A rechargeable battery may include a pair of terminals provided in, on, at or through a cap plate. At least one of the terminals may be formed of an assembly of a rivet terminal penetrating the cap plate, and a terminal plate located on an external surface of the cap plate.

The rivet terminal may be insulated from the cap plate by a seal gasket, and the terminal plate may be insulated from the cap plate by an insulator. The plurality of bus bars may be fixed to the exterior surface of the terminal plate by a welding method, such as laser welding.

### SUMMARY

The present disclosure provides a rechargeable battery and a battery module that can suppress deformation and thermal damage of an insulator and a seal gasket due to heat during a process of welding a bus bar and a terminal plate.

A rechargeable battery according to one or more embodiments includes an electrode assembly, a cap plate defining a terminal hole, and a pair of terminals connected with the electrode assembly. At least one of the terminals includes a rivet terminal in the terminal hole with a seal gasket between the rivet terminal and the cap plate. At least the one terminal of the terminals includes a terminal plate coupled to the rivet terminal, surrounding a part of the rivet terminal at an exterior of the cap plate, and having an air layer therein. At least the one terminal of the terminals includes an insulator between the cap plate and the terminal plate, and overlapping the air layer in a thickness direction of the cap plate. Hence, due to the air layer, heat generated by terminal plate due to conducting electricity can be emitted or released more efficiently also via conduction, thereby improving cooling of the terminal plate.

The air layer may be separated from the rivet terminal in plan view. The air layer may be arranged at a distance from the rivet terminal along or perpendicular to the thickness direction of the cap plate. An advantage of this embodiment may be that forces acting while riveting the rivet terminal are less likely to deform the terminal plate.

The air layer may include or may be formed by a penetration hole extending in plan view or parallel to the cap plate and located closer to an interior surface of the terminal plate than to an exterior surface of the terminal plate. The interior surface of the terminal plate may face toward the cap plate and/or be closer to the cap plate than the exterior surface. The exterior surface may face away from the cap plate and/or be farther away from the cap plate than the interior surface. An advantage of this embodiment may be that the penetration hole as structural element of the terminal plate is less likely to close inadvertently.

The penetration hole may be provided as a pair of penetration holes collectively extending parallel to the cap plate with the rivet terminal therebetween. The terminal plate may comprise two penetration holes, at least one and in particular both of which extending parallel to the cap plate and/or to each other and/or to a width direction of the cap plate. The width direction of the cap plate may be a direction that extends perpendicular to the thickness direction of the cap plate. The width direction may extend from one terminal to the other terminal of the pair of terminals. The rivet terminal may be arranged between the two penetration holes, for example parallel to the cap plate and/or perpendicular to a longitudinal direction of at least one of the penetration holes. An advantage of this embodiment may be that cooling is improved symmetrically with respect to the rivet terminal which may be a main source for heat.

The rechargeable battery may further include at least one heat-blocking plate arranged in the penetration hole and including metal having a higher melting point than a melting point of the terminal plate. The rechargeable battery may further include heat-blocking plates respectively in the penetration holes and including metal having a higher melting point than a melting point of the terminal plate. An advantage of this embodiment may be that heat is hindered from spreading beyond the heat-blocking plate, protecting more heat sensitive elements of the terminal from overheating.

The air layer may comprise a groove or may be formed by a groove. The groove may be formed into the terminal plate. The groove may be formed in a surface of the terminal plate that faces the cap plate, e.g. the interior surface of the terminal plate. The groove may open towards the cap plate. The groove may extend parallel to the cap plate. The groove may include or be a concave groove partially defined by the interior surface of the terminal plate. An advantage of this embodiment may be that the groove providing a free volume for the air layer may be formed easily.

The terminal plate may comprise two grooves or concave grooves, at least one and in particular both of which extending parallel to the cap plate and/or to each other. The rivet terminal may be arranged between the two grooves or concave grooves, for example parallel to the cap plate and/or perpendicular to a longitudinal direction of at least one of the grooves or concave grooves. The grooves or concave grooves may be aligned parallel to a width direction of the cap plate with a corresponding one of the rivet terminals therebetween. The width direction may extend perpendicular to the thickness direction. The groove or concave groove may be provided as a pair of concave grooves collectively extending parallel to the cap plate with the rivet terminal therebetween. An advantage of this embodiment may be that symmetry of the terminal plate is not affected by the grooves, thereby not only improving cooling but also structural integrity of the terminal plate.

The rechargeable battery may further include at least one heat-blocking plate abutting or confining the air layer at least one side of the air layer. The at least one heat-blocking plate may be arranged in the concave groove. The heat-blocking plates may be arranged in the concave grooves. The at least one heat-blocking plate may include a metal material or metal allow having a higher melting point than a melting point of the terminal plate. The rechargeable battery may further include heat-blocking plates respectively in the concave grooves and including metal having a higher melting point than a melting point of the terminal plate. An advantage of this embodiment may be that heat is blocked or hindered from spreading to protect heat sensitive elements of the terminal, even if the melting point of the terminal plate should be reached.

The heat-blocking plates may include an extension portion protruding to an outer side of or from the terminal plate. The extension portion may protrude from the terminal plate parallel to the cap plate. The extension portion may protrude from opposite sides of the terminal plate parallel to the cap plate. An advantage of this embodiment may be that the extension portion may safely conduct heat or hot air away from the terminal plate.

The insulator may include a bottom portion contacting a bottom surface of the terminal plate, and a side portion contacting a side surface of the terminal plate, and defining an open portion through which the air layer is in communication with the exterior of the cap plate. The insulator may include a bottom portion contacting an interior surface of the terminal plate, and a side portion contacting a part of a side surface of the terminal plate, and defining an open portion providing communication of the air layer with the exterior or surroundings of the cap plate. An advantage of this embodiment may be that heat or hot air can readily escape through the open portion.

A battery module according to one or more embodiments includes rechargeable batteries respectively including a cap plate defining terminal holes, and a pair of terminals in the cap plate, connected with an electrode assembly, and respectively including rivet terminals respectively in the terminal holes with seal gaskets respectively between the cap plate and the rivet terminals, terminal plates respectively coupled to the rivet terminals, and respectively surrounding parts of the rivet terminals at an exterior of the cap plate, and insulators respectively between the cap plate and the terminal plates, and bus bars respectively fixed to corresponding ones of the terminal plates, and coupled to respective ones of the terminals to electrically connect the rechargeable batteries, wherein the terminal plates respectively include an air layer between a respective one of the insulators and a respective one of the bus bars along a thickness direction of the cap plate. Hence, due to the air layer, heat generated by terminal plate due to conducting electricity can be emitted or released more efficiently also via conduction, thereby improving cooling of the terminal plate.

The battery module may further include a welding nugget between a respective one of the bus bars and a respective one of the terminal plates due to welding, and having a thickness along the thickness direction that is less than or equal to a distance between an upper surface of the respective one of the bus bars and the air layer. The welding nugget may be a welding seam or a welding spot. An advantage of this embodiment may be that the welding nugget is better protected from overheating.

The air layer may be separated from a corresponding one of the rivet terminals in plan view. An advantage of this embodiment may be that forces acting while riveting the rivet terminal are less likely to deform the terminal plate.

The air layer may be provided as a pair of concave grooves respectively partially defined by an interior surface of a corresponding one of the terminal plates and aligned parallel to a width direction of the cap plate with a corresponding one of the rivet terminals therebetween. An advantage of this embodiment may be that the grooves providing free volumes for the air layer may be formed easily while not affecting or maintaining symmetry of the terminal plate, thereby not only improving cooling but also structural integrity of the terminal plate.

The battery module may further include heat-blocking plates respectively in the concave grooves and including a metal having a higher melting point than a melting point of the terminal plates. An advantage of this embodiment may be that heat is hindered from spreading beyond the heat-blocking plates, protecting more heat sensitive elements of the terminals from overheating.

The heat-blocking plates may respectively include an extension portion protruding to an outer side of the corresponding one of the terminal plates. An advantage of this embodiment may be that the extension portions may safely conduct heat or hot air away from the terminal plates.

The air layer may include a penetration hole penetrating a corresponding one of the terminal plates, and located closer to a corresponding one of the insulators than a corresponding one of the bus bars. An advantage of this embodiment may be that the insulators, which may be more heat sensitive than the bus bars, may be better protected from overheating.

The penetration hole may be provided as a pair of penetration holes collectively aligned parallel to a width direction of the cap plate with a corresponding one of the rivet terminals therebetween. An advantage of this embodiment may be that cooling is improved symmetrically with respect to the rivet terminal which may be a main source for heat.

The battery module may further include heat-blocking plates respectively in the penetration holes and including a metal having a higher melting point than a melting point of the terminal plates. An advantage of this embodiment may be that heat is blocked or hindered from spreading to protect heat sensitive elements of the terminals, even if the melting point of the terminal plates should be reached.

The insulators may respectively include a bottom portion contacting an interior surface of a respective one of the terminal plates, and a side portion contacting a part of a side surface of the respective one of the terminal plates, and defining an open portion providing communication of the air layer with the exterior or surroundings of the cap plate. An advantage of this embodiment may be that heat or hot air can readily escape through the open portions.

The battery module may reduce or minimize deformation and thermal damage to the insulator and the seal gasket during the process of welding the bus bar and terminal plate, and may maintain high insulation performance of the insulator and seal gasket.

In order to overlap the air layer, the insulator may be arranged between the air layer and the cap plate. The insulator may be arranged before air layer in a direction perpendicular to cap plate and away from rechargeable battery. A projection of the air layer in a direction perpendicular to the cap plate and towards the rechargeable battery may extend at least partly through the insulator. The thickness direction of the cap plate may be perpendicular to cap plate.

### BRIEF DESCRIPTION OF THE DRAWINGS

FIG. 1 is an exploded perspective view of a battery module according to one or more embodiments.
FIG. 2 is a perspective view of a rechargeable battery of the battery module shown in FIG. 1.
FIG. 3 is a cross-sectional view of the rechargeable battery shown in FIG. 2.
FIG. 4 is an exploded cross-sectional view of the electrode assembly of the rechargeable battery shown in FIG. 3.
FIG. 5 is an enlarged view of the positive electrode terminal and the negative electrode terminal of the rechargeable battery shown in FIG. 3.
FIG. 6 is a top plan view of the rechargeable battery shown in FIG. 2.
FIG. 7 is a front view of the positive electrode terminal and the negative electrode terminal shown in FIG. 6.
FIG. 8 is a cross-sectional view of a coupling structure of the bus bar shown in FIG. 1 and the terminal plate shown in FIG. 5.
FIG. 9 shows a battery module according to one or more other embodiments.
FIG. 10 shows a battery module according to still one or more other embodiments.
FIG. 11 is an exploded perspective view of a terminal plate and a heat-blocking plate shown in FIG. 10.
FIG. 12 shows a battery module according to still one or more other embodiments.
FIG. 13, FIG. 14, and FIG. 15 show a battery module according to still one or more other embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component (e.g., an apparatus, a device, a circuit, a wire, an electrode, a terminal, a conductive film, etc.) is referred to as being "formed on," "on," "connected to," or "(operatively, functionally, or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a transistor, a resistor, an inductor, a capacitor, a diode and/or the like. Accordingly, a connection is not limited to the connections illustrated in the drawings or the detailed description and may also include other types of connections. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XY, YZ, and XZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are only used to distinguish one element, member, component, region, area, layer, section, or portion from another element, member, component, region, area, layer, section, or portion. Thus, a first element, component, region, layer, or section described below could be termed a second element, component, region, layer, or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure." Furthermore, the expression "being the same" may mean "being substantially the same." In other words, the expression "being the same" may include a range that can be tolerated by those of ordinary skill in the art. The other expressions may also be expressions from which "substantially" has been omitted.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

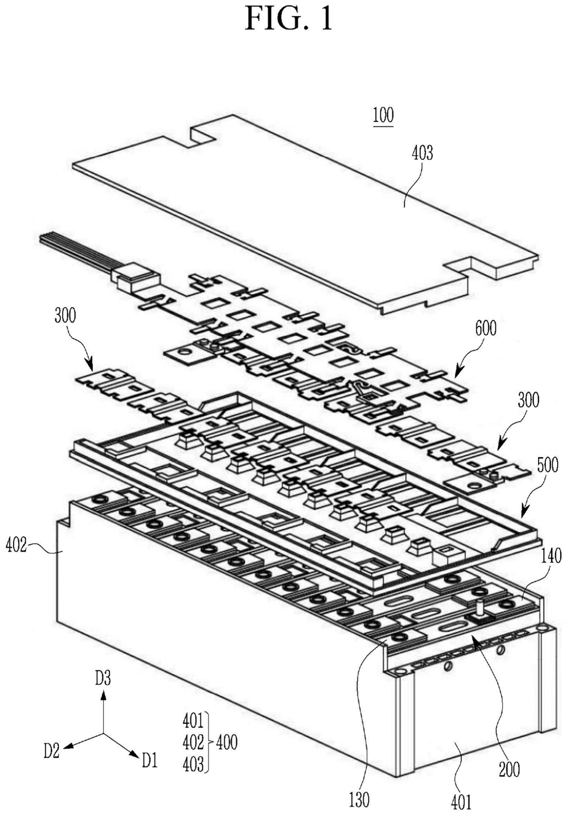

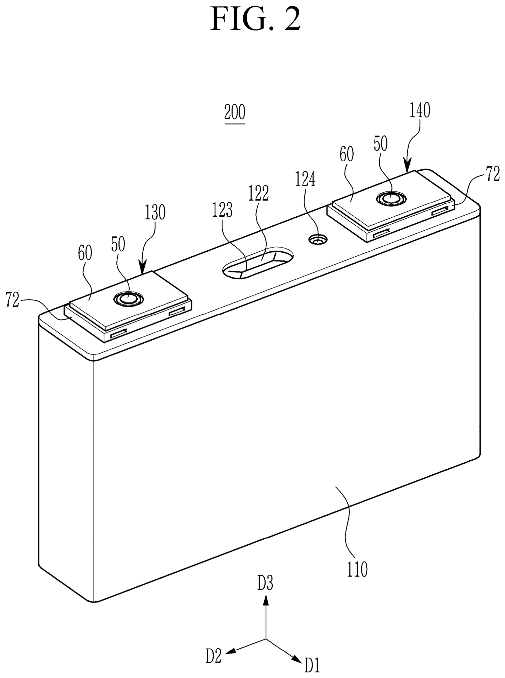

FIG. 1 is an exploded perspective view of a battery module according to one or more embodiments. FIG. 2 is a perspective view of a rechargeable battery of the battery module shown in FIG. 1.

Referring to FIG. 1 and FIG. 2, a battery module 100 according to one or more embodiments includes a plurality of rechargeable batteries 200, and a plurality of bus bars 300 that are coupled to the plurality of rechargeable batteries 200 and that electrically connect the plurality of rechargeable batteries 200. In one or more embodiments, the battery module 100 may include a frame that aligns and supports the plurality of rechargeable batteries 200, a bus bar holder 500 supporting the plurality of bus bars 300, and a circuit board 600 where a plurality of circuit components is mounted.

The rechargeable battery 200 may have, for example, a rectangular shape, and plurality of rechargeable batteries 200 may be aligned side by side in one line. The plurality of rechargeable batteries 200 may be arranged in a single row with their relatively wide surfaces facing each other. The rechargeable battery 200 may include a can 110 and a cap plate 120 that accommodate an electrode assembly, and a positive terminal 130 and a negative terminal 140 provided in the cap plate 120.

The frame 400 may include a pair of end plates 401 and a pair of side plates 402. The pair of end plates 401 may respectively contact two outermost rechargeable batteries 200 among the plurality of rechargeable batteries 200. The pair of side plates 402 may be orthogonal to the pair of end plates 401, and may contact side surfaces of the plurality of rechargeable batteries 200.

The frame 400 may further include a top plate 403 and a bottom plate. The top plate 403 may be located on an upper side of the circuit board 600, and the bottom plate may be located in contact with bottom surfaces of the plurality of rechargeable batteries 200. The frame 400 may have a substantially rectangular shape, and may accommodate the plurality of rechargeable batteries 200, the plurality of bus bars 300, the bus bars holder 500, and the circuit board 600 therein.

The bus bars holder 500 may be located on an upper side of the plurality of rechargeable batteries 200. The bus bars holder 500 may be an insulating plate of approximately rectangular shape. A plurality of openings is located in the bus bars holder 500 to expose a plurality of terminals 130 and 140. The plurality of bus bars 300 may be coupled to the plurality of terminals 130 and 140 exposed by the openings.

The plurality of bus bars 300 may be coupled in series and/or in parallel with the plurality of rechargeable batteries 200. For example, one of the bus bars 300 may be coupled to one terminal of one rechargeable battery 200 and to a terminal of another rechargeable battery 200, thereby electrically connecting the two terminals.

The two terminals connected by the bus bar 300 may all be positive terminals 130, may all be negative terminal 140, or may be a positive terminal 130 and a negative terminal 140. Each of the plurality of bus bars 300 may be fixed to two terminals 130 and 140 by laser welding.

The circuit board 600 may be electrically connected with the plurality of bus bars 300. A plurality of circuit parts for control and management of the rechargeable battery 200, and a plurality of parts for measuring state information, such as a voltage and a temperature of the rechargeable battery 200, may be mounted in the circuit board 600.

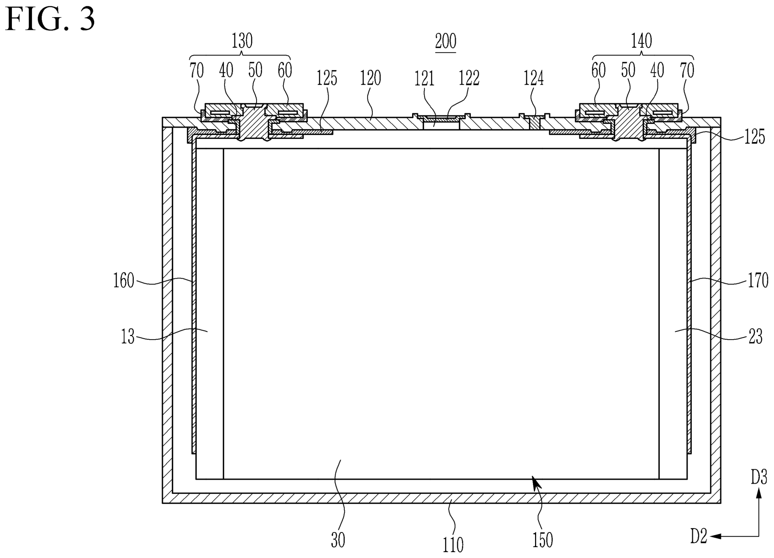

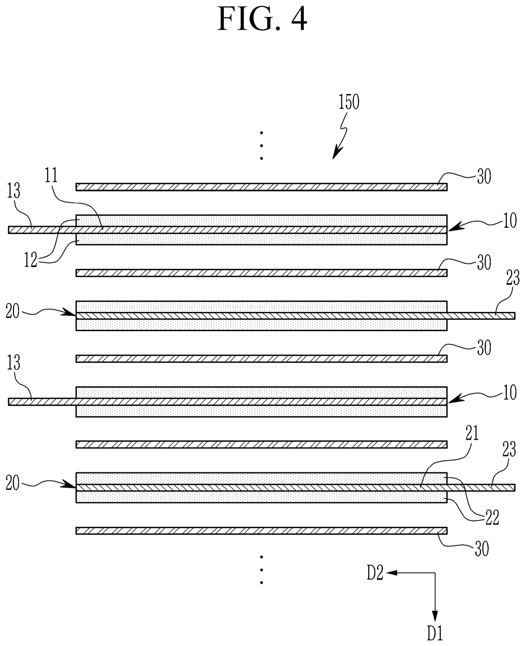

FIG. 3 is a cross-sectional view of the rechargeable battery shown in FIG. 2. FIG. 4 is an exploded cross-sectional view of the electrode assembly of the rechargeable battery shown in FIG. 3.

Referring to FIG. 2 to FIG. 4, the rechargeable battery 200 may include an electrode assembly 150, the can 110 accommodating the electrode assembly 150 and an electrolyte in an internal space, the cap plate 120 coupled to an open end of the can 110 to seal the can 110, and the positive terminal 130 and the negative terminal 140 provided in the cap plate 120.

The electrode assembly 150 may include at least one positive electrode 10, at least one negative electrode 20, and at least two separators 30, and may be configured in a stacked or wound type. In FIG. 3 and FIG. 4, a stacked electrode assembly is shown as an example.

In one or more embodiments corresponding to the stacked type, a plurality of positive electrodes 10 and a plurality of negative electrodes 20 are alternately laminated one by one with the separator 30 in between to form the electrode assembly 150. In one or more embodiments corresponding to the wound type, a laminate of the negative electrode, a first separator, the positive electrode, and a second separator may be wound to form an electrode assembly.

The positive electrode 10 may include a positive substrate 11 and a positive active material layer 12 located on at least one surface of the positive substrate 11. The negative electrode 20 may include a negative substrate 21, and a negative active material layer 22 located on at least one surface of the negative substrate 21. The separator 30 is located between the positive electrode 10 and the negative electrode 20 to physically separate them.

The positive substrate 11 may be formed of a metal thin plate having excellent electrical conductivity, such as aluminum foil or aluminum mesh. The positive active material layer 12 may include a positive active material, and may further include a binder and/or a conductive material. The positive substrate 11 provides a movement path for charge generated from the positive active material layer 12, and supports the positive active material layer 12.

The positive active material may include a lithium transition metal composite oxide. The lithium transition metal composite oxide may include, for example, at least one of a lithiumnickel oxide, a lithium-cobalt oxide, a lithium-manganese oxide, a lithium-iron phosphate compound, or a cobalt-free lithium nickel-manganese oxide.

The negative substrate 21 may be formed of a metal thin plate having excellent electrical conductivity, for example copper foil, copper mesh, nickel foil, nickel mesh, and/or the like. The negative active material layer 22 includes a negative active material, and may further a binder and/or a conductive material. The negative substrate 21 provides a movement path of charges generated from the negative active material layer 22, and supports the negative active material layer 22.

The negative active material may include at least one of a carbon-based active material or a silicon-based active material. The carbon-based active material may include at least one of a natural graphite or an artificial graphite. The silicon-based active material may include at least one of a silicon-carbon composite active material, a silicon oxide (SiOx, 0<x≤2), or a silicon carbide (SiC).

In each of the positive active material layer 12 and the negative active material layer 22, the binder may include at least one of an aqueous binder, a non-aqueous binder, or a dry binder. In each of the positive active material layer 12 and the negative active material layer 22, the conductive material may include at least one of a carbon-based material, such as natural graphite, artificial graphite, carbon black, carbon fiber, carbon nanofiber, carbon nanotube, and/or the like; a metal material in the form of metal powder or metal fiber including copper, nickel, aluminum, silver, and/or the like, and/or a conductive polymer, such as a polyphenylene derivative and/or the like.

The separator 30 may be formed of a porous substrate, or may be formed of a porous substrate having a coating layer positioned on at least one surface. The porous substrate may include one or more of polyethylene, polypropylene, polyethylene terephthalate, polypropylene terephthalate, polybutylene terephthalate, polyester, polycarbonate, or polyimide. The coating layer may include a binder, and the binder may include polyvinylidene fluoride-based compound.

In the positive electrode 10, the positive active material layer 12 may be located in a portion excluding one edge (e.g., the left side in FIG. 4) of the positive substrate 11. In the positive substrate 11, a portion not covered by the positive active material layer 12 may be called a positive uncoated region 13. A plurality of positive uncoated regions 13 are laminated to each other, and may be integrally fixed by welding and/or the like.

In the negative electrode 20, the negative active material layer 22 may be located in portions excluding the other edge (e.g., the right side in FIG. 4) of the negative substrate 21. In the negative substrate 21, a portion not covered by the negative active material layer 22 may be called a negative uncoated region 23. A plurality of negative uncoated regions 23 are laminated to each other, and may be integrally fixed by welding and/or the like.

The electrode assembly 150 may be accommodated in an internal space of the can 110 together with an electrolyte (e.g., electrolyte solution). The electrolyte is a medium that enables the movement of lithium ions between the positive electrode 10 and the negative electrode 20, and may include lithium salt, organic solvent, and additives. The separator 30 retains electrolytes due to its porous structure, and may pass lithium ions.

The can 110 and the cap plate 120 may be manufactured using a metal, such as stainless steel and/or the like. The cap plate 120 may include a vent hole 121 and a safety vent 122. The safety vent 122 may be a metal plate having a thickness that is less than that of the cap plate 120, and may include a notch 123 that is ruptured at a pressure (e.g., predetermined pressure) to relieve an internal pressure. In FIG. 3, the reference numeral 124 indicates a plug that seals an electrolyte injection opening.

The rechargeable battery 200 may include a positive current collector 160 that connects the positive uncoated region 13 and the positive terminal 130, and a negative current collector 170 that connects the negative uncoated region 23 and the negative terminal 140. The positive terminal 130 may be electrically connected with the positive electrode 10 by the positive current collector 160, and the negative terminal 140 may be electrically connected with the negative electrode 20 by the negative current collector 170.

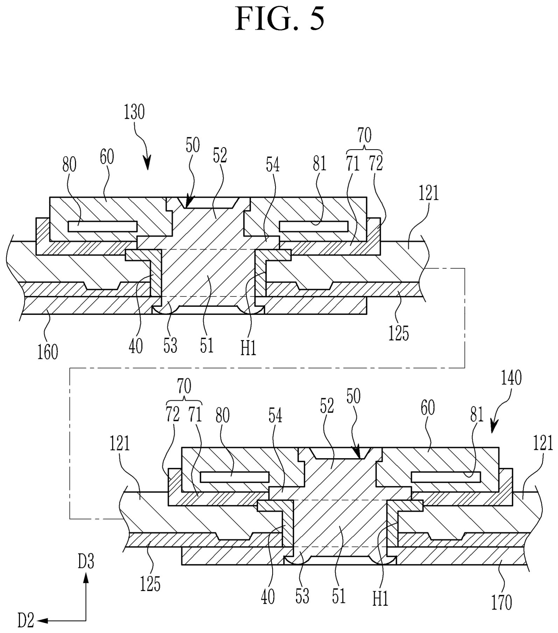

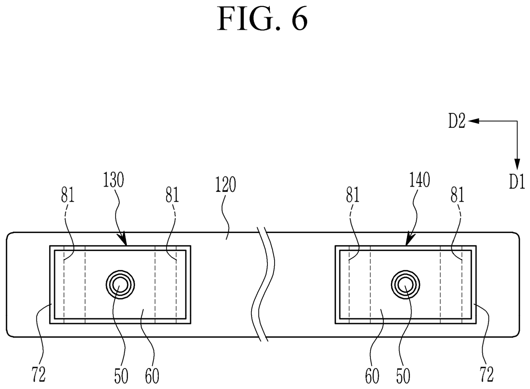

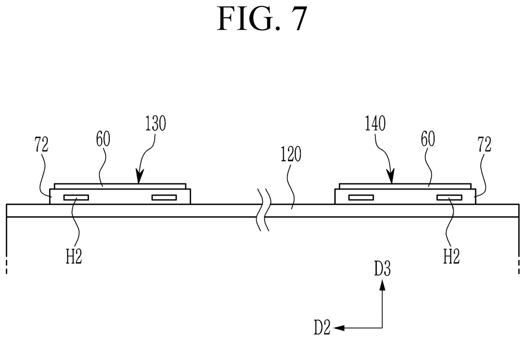

FIG. 5 is an enlarged view of the positive electrode terminal and the negative electrode terminal of the rechargeable battery shown in FIG. 3. FIG. 6 is a top plan view of the rechargeable battery shown in FIG. 2. FIG. 7 is a front view of the positive electrode terminal and the negative electrode terminal shown in FIG. 6.

Referring to FIG. 5 to FIG. 7, each of the positive terminal 130 and the negative terminal 140 may include a rivet terminal 50 inserted into a terminal hole H1 of the cap plate 120 with the seal gasket 40 in between, a terminal plate 60 located outside the cap plate 120 and coupled to the rivet terminal 50 to surround an external circumferential surface of a part of the rivet terminal 50, and an insulator 70 located between an outer surface of the cap plate 120 and the terminal plate 60.

The seal gasket 40 may insulate the cap plate 120 and the rivet terminal 50, and may seal the terminal hole H1 to reduce or prevent a leakage of the electrolyte. The insulator 70 may insulate the cap plate 120 and the terminal plate 60. An internal insulator 125 may be located in an inner surface the cap plate 120. The internal insulator 125 may insulate the positive current collector 160 and the cap plate 120, and may insulate the negative current collector 170 and the cap plate 120.

The rivet terminal 50 may have a height, or thickness, that is greater than a thickness of the cap plate 120, and may be divided into a middle portion 51, an outer portion 52, and an inner portion 53 for convenience. The middle portion 51 is a portion surrounded by the seal gasket 40, and may be located in the terminal hole H1 of the cap plate 120. The outer portion 52 may be a portion protruded to the outside (the upper side in FIG. 5) of the cap plate 120 from the middle portion 51. The inner portion 53 may be a portion protruded to the inner side (the bottom side in FIG. 5) of the cap plate 120 from the middle portion 51.

The rivet terminal 50 may include a flange 54 located between the middle portion 51 and the outer portion 52. The flange 54 serves to determine a position of the rivet terminal 50 upon assembling the rivet terminal 50 to the cap plate 120. The terminal plate 60 may be coupled to the outer portion 52 of the rivet terminal 50. The positive current collector 160 or the negative current collector 170 may be coupled to the inner portion 53 of a corresponding rivet terminal 50.

The terminal plate 60 may be coupled to the rivet terminal 50 to surround the external circumferential surface of the outer portion 52. The terminal plate 60 may be located in parallel with the outer portion 52 along a plane direction of the cap plate 120. The plane direction of the cap plate 120 is a direction parallel to the outer surface of the cap plate 120 (e.g., plan view). A length direction D2 and a width direction D1 of the cap plate 120 belong to the plane direction.

The uppermost part of the rivet terminal 50 and the outer surface (top surface) of the terminal plate 60 may be located at the same height. In this case, heights of the positive terminal 130 and the negative terminal 140 exposed to the outside of the cap plate 120 may be reduced or minimized to reduce the entire height of the rechargeable battery 200.

The insulator 70 may surround the external circumferential surface of the flange 54, and may contact a bottom surface and part of a side surface of the terminal plate 60. For example, the insulator 70 may include a bottom portion 71 that is in contact with a bottom surface of the terminal plate 60 and a side portion that surrounds a part of the side surface of the terminal plate 60.

In the terminal plate 60, an air layer 80 may be located in a portion overlapping the insulator 70 along a thickness direction D3 of the cap plate 120. The air layer 80 may be located at a distance from the rivet terminal 50 along the plane direction of the cap plate 120 (e.g., may be separated from the rivet terminal 50 in plan view), and may not overlap the rivet terminal 50 along the thickness direction D3 of the cap plate 120.

In one or more embodiments, a part of the air layer 80 may overlap the flange 54, while not overlapping other remaining portions of the rivet terminal 50 excluding the flange 54, in the thickness direction D3 of the cap plate 120.

The air layer 80 is an open space through which air can flow in and out, and may be implemented by an I-shaped penetration hole 81 penetrating the terminal plate 60 along the plane direction of the cap plate 120. The terminal plate 60 may be provided with two penetration holes 81, and the two penetration holes 81 may be located parallel to both sides (the left and right sides of the rivet terminal 50 in the drawing) of the rivet terminal 50. The two penetration holes 81 may be parallel with the width direction D1 of the cap plate 120.

An open portion, for example a recess portion or an opening may be located in the side portion 72 of the insulator 70 to expose the penetration hole 81. In FIG. 7, it is shown as an example that an opening H2 is located in the side portion 72 of the insulator 70. The opening H2 exposes the penetration hole 81 to allow the air layer 80 to communicate with the outside air.

Referring to FIG. 5, the penetration hole 81 may be a flat quadrangle of which a horizontal width is two times larger than a height. In one or more embodiments, the penetration hole 81 may be located closer to an interior surface (bottom surface) of the terminal plate 60 than to an exterior surface (top surface) of the terminal plate 60. For example, assuming a virtual center line dividing the terminal plate 60 into upper and lower parts along the thickness direction D3, the penetration hole 81 may be located below the center line.

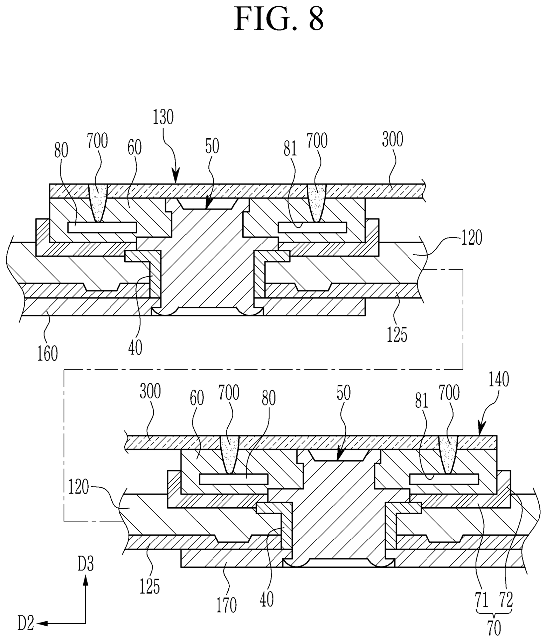

FIG. 8 is a cross-sectional view of a coupling structure of the bus bar shown in FIG. 1 and the terminal plate shown in FIG. 5.

Referring to FIG. 8, the bus bar 300 may be in contact with the exterior surface (top surface) of the terminal plate 60, and may be fixed to the terminal plate 60 by welding, such as laser welding and/or the like. The air layer 80 may be located between the insulator 70 and the bus bar 300 along the thickness direction D3 of the cap plate 120.

A welding nugget 700 may be located in the bus bar 300 and the terminal plate 60 that are fixed by welding. In a cross-section, the welding nugget 700 may be an elongated shape parallel to the thickness direction D3 of the cap plate 120 and may be located above the air layer 80 with reference to the drawing.

The air layer 80 serves to quickly discharge heat generated upon welding the bus bar 300 and the terminal plates 60 to the outside. Because the air layer 80 is an open space connected to the outside, the heat generated during welding can be discharged to the outside. In one or more embodiments, thermal damage applied to the insulator 70 and the seal gasket 40 during the welding process can be reduced or minimized.

In general, over-welding may occur for various reasons during the process of welding the bus bar and the terminal plate, and in this case, the welding nugget may invade the insulator, or may be located very close to the insulator and the seal gasket, which may cause deformation and thermal damage to the insulator and/or the seal gasket. In this case, insulation performance of the insulator and/or the seal gasket is weakened, thereby deteriorating durability and safety of the battery module in long-term use of the battery module.

In the battery module of one or more embodiments, the air layer 80 may block diffusion of the welding nugget 700 toward the insulator 70 and the seal gasket 40 even if the over-welding occurs. In one or more embodiments, even if over-welding occurs, the welding nugget 700 may only be diffused to the air layer 80. In a cross-section, the maximum height of the welding nugget 700 along the thickness direction D3 of the cap plate 120 (e.g., a thickness of the welding nugget 700) may be the same as or less than a distance between the exterior surface of the bus bar 300 and the air layer 80.

In this way, the battery module 100 can reduce or minimize deformation and thermal damage of the insulator 70 and the seal gasket 40, and may maintain high insulation performance of the insulator 70 and the seal gasket 40. As a result, the excellent durability and safety of the battery module 100 can be implemented even in the long-term use of the battery module.

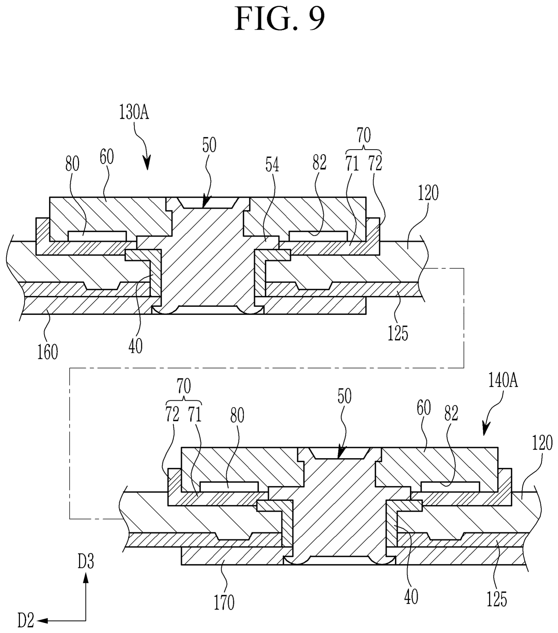

FIG. 9 shows a battery module according to one or more other embodiments.

Referring to FIG. 9, an air layer 80 of a terminal plate 60 may be implemented by an I-shaped concave groove 82 provided in (e.g., defined by) an interior surface (bottom surface) of a terminal plate 60 that faces a bottom portion 71 of an insulator 70. The terminal plate 60 may be provided with two concave grooves 82, and the two concave grooves 82 may be located in parallel to both sides of a rivet terminal 50.

A positive terminal 130A and a negative terminal 140A may be formed in the same or similar configuration as the above-described embodiments, except that the air layer 80 is implemented by the concave groove 82.

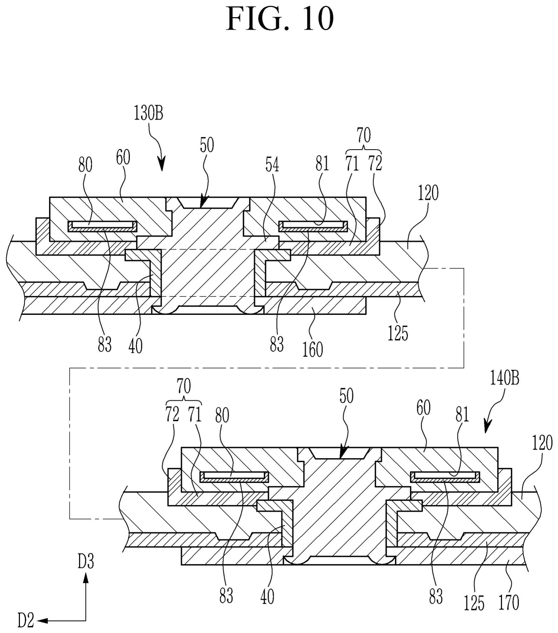

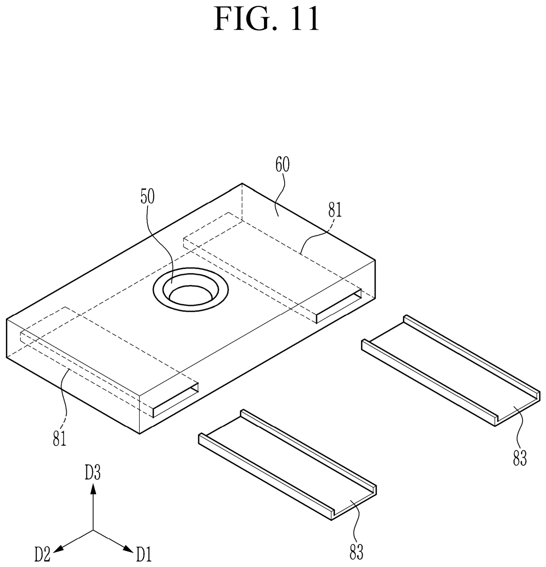

FIG. 10 shows a battery module according to still one or more other embodiments. FIG. 11 is an exploded perspective view of a terminal plate and a heat-blocking plate shown in FIG. 10.

Referring to FIG. 10 and FIG. 11, a positive terminal 130B and a negative terminal 140B each may further include a heat-blocking plate 83 that is located in a penetration hole 81 of a terminal plate 60. The heat-blocking plate 83 may be made of a high melting point metal having a higher melting point than the terminal plate 60. For example, if the terminal plate 60 is made of an aluminum material or a copper material, the heat-blocking plate 83 may be made of a stainlesssteel material having a melting point of approximately 1.500 °C.

The heat-blocking plate 83 may be located in a part of the penetration hole 81, and may be located in parallel with the air layer 80. For example, the heat-blocking plate 83 may be located at a lower portion of the penetration hole 81, and may face the air layer 80 along a thickness direction D3 of a cap plate 120. The heat-blocking plate 83 may be located closer to a bottom portion 71 of an insulator 70 than the air layer 80.

A thickness of the heat-blocking plate 83 may be less than a height of the penetration hole 81, and may be, for example, half of the height of the penetration hole 81. The heat-blocking plate 83 may be formed of a square plate having a constant thickness or of a roughly square plate having a pair of side walls. FIG. 10 and FIG. 11 illustrate the latter case as an example. A length of the heat-blocking plate 83 along the width direction D1 of a cap plate 120 may be the same as a length of the terminal plate 60.

Because the heat-blocking plate 83 has a higher melting point than the terminal plate 60, if over-welding occurs during a process of welding the bus bar 300 and the terminal plate 60, diffusion of a welding nugget toward the insulator 70 and the seal gasket 40 can be effectively blocked. In one or more embodiments, during the welding process, the air layer 80 may discharge heat and at the same time the heat-blocking plate 83 may serve as a barrier to block the diffusion of the welding nugget.

In one or more embodiments, even if over-welding occurs in the battery module provided with all the air layer 80 and the heat-blocking plate 83, deformation and thermal damage of the insulator 70 and the seal gasket 40 can be effectively suppressed. A positive terminal 130B and a negative terminal 140B may have the same or similar configuration as the above-described embodiments, except that the heat-blocking plate 83 is located in the penetration hole 81.

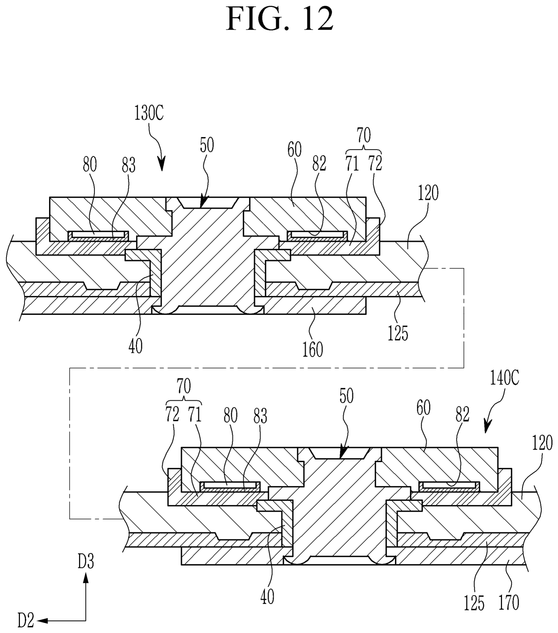

FIG. 12 shows a battery module according to still one or more other embodiments.

Referring to FIG. 12, a positive terminal 130C and a negative terminal 140C each may further include a heat-blocking plate 83 located in a concave groove 82 of a terminal plate 60. The configuration and function of the heat-blocking plate 83 are the same as those of the above-described embodiments, and redundant description is omitted.

A thickness of the heat-blocking plate 83 may be less than a depth of the concave groove 82 in a thickness direction D3 of a cap plate 120. The heat-blocking plate 83 may be located in a part of the concave groove 82, and may be located in parallel with an air layer 80.

For example, the heat-blocking plate 83 may be located below the concave groove 82, and may face the air layer 80 along the thickness direction D3 of the cap plate 120. The heat-blocking plate 83 may be in contact with a bottom portion 71 of the insulator 70, and the air layer 80 may be located between the terminal plate 60 and the heat-blocking plate 83.

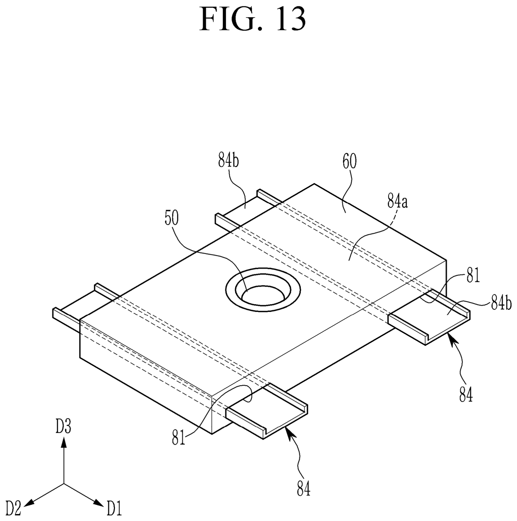

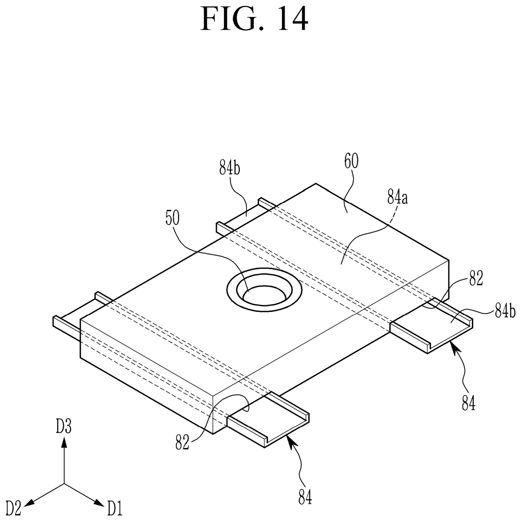

FIG. 13 to FIG. 15 show a battery module according to still one or more other embodiments.

Referring to FIG. 13 to FIG. 15, a part of a heat-blocking plate 84 may be exposed to the outside of a terminal plate 60 in each of a positive terminal 130D and a negative terminal 140D. For example, the heat-blocking plate 84 may include a main body 84a located in a penetration hole 81 or a concave groove 82 of the terminal plate 60, and an extension portion 84b connected with the main body 84a and exposed to the outside of the terminal plate 60.

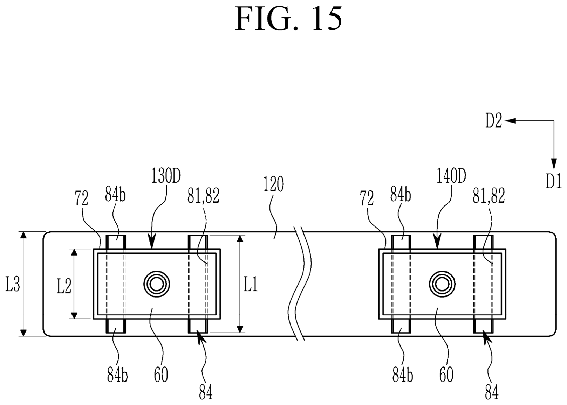

A length L1 (refer to FIG. 15) of the heat-blocking plate 84 may be greater than a length L2 (refer to FIG. 15) of the terminal plate 60 measured along a width direction D1 of the cap plate 120, and may be less than a width L3 (refer to FIG. 15) of the cap plate 120.

A length of the extension portion 84b exposed through one side of the terminal plate 60, and a length of the extension portion 84b exposed through the opposite side of the terminal plate 60, may be the same. As the extension portion 84b is located while being exposed to the outside air, a heat generated during a process of welding the terminal plate 60 and a bus bar 300 can be dissipated very effectively through the extension portion 84b. In one or more embodiments, the extension portion 84b may serve as a kind of heat-dissipating fin. The battery module 100 of the embodiments described above can reduce or minimize thermal damage to the insulator 70 and/or the seal gasket 40 otherwise caused due to welding by using the air layer 80 or by a combination of the air layer 80 and the heat-blocking plates 83 and 84. The battery module 100 of the embodiments described above can maintain the insulation performance of the insulator 70 and the seal gasket 40, thereby realizing excellent durability and safety even if used for a long time.

## Claims

1. A rechargeable battery (200) comprising:
an electrode assembly (150);
a cap plate (120) defining a terminal hole; and
a pair of terminals (130, 140) connected with the electrode assembly (150), at least one of the terminals (130, 140) of the pair comprising:
a rivet terminal (50) in the terminal hole with a seal gasket (40) between the rivet terminal (50) and the cap plate (120);
a terminal plate (60) coupled to the rivet terminal (50), surrounding a part of the rivet terminal (50) at an exterior of the cap plate (120), and having an air layer (80) therein; and
an insulator (70) between the cap plate (120) and the terminal plate (60), the insulator (70) overlapping the air layer (80) in a thickness direction of the cap plate (120).

2. The rechargeable battery (200) as claimed in claim 1, wherein the air layer (80) is separated from the rivet terminal (50) in plan view.

3. The rechargeable battery (200) as claimed in claim 1 or 2, wherein the air layer (80) comprises [or is formed by] a penetration hole (81) extending parallel to the cap plate (120) and located closer to an interior surface of the terminal plate (60) than to an exterior surface of the terminal plate (60).

4. The rechargeable battery (200) as claimed in claim 3, further comprising a heat-blocking plate (83, 84) arranged in the penetration hole (81) and comprising metal having a higher melting point than a melting point of the terminal plate (60).

5. The rechargeable battery (200) as claimed in claim 3 or 4, wherein the penetration hole (81) is provided as a pair of penetration holes (81) collectively extending parallel to the cap plate (120) with the rivet terminal (50) therebetween.

6. The rechargeable battery (200) as claimed in any of claims 1 to 5, wherein the air layer (80) comprises a concave groove (82) partially defined by a surface of the terminal plate (60) that faces the cap plate (120).

7. The rechargeable battery (200) as claimed in claim 6, wherein the concave groove (82) is provided as a pair of concave grooves (82) collectively extending parallel to the cap plate (120) with the rivet terminal (50) therebetween.

8. The rechargeable battery (200) as claimed in any of claims 1 to 7, further comprising a heat-blocking plate (83, 84) abutting the air layer (80) and comprising a metal having a higher melting point than a melting point of the terminal plate (60).

9. The rechargeable battery (200) as claimed in claim 8, wherein the heat-blocking plate (83, 84) comprises an extension portion (84b) protruding to an outer side of or from the terminal plate (60).

10. The rechargeable battery (200) as claimed in any of claims 1 to 9, wherein the insulator (70) comprises:
a bottom portion (71) contacting a bottom surface of the terminal plate (60); and
a side portion (72) contacting a side surface of the terminal plate (60), and defining an open portion through which the air layer (80) is in communication with the exterior of the cap plate (120).

11. A battery module (100) comprising:
rechargeable batteries according to any of the previous claims, and
bus bars (300) respectively fixed to corresponding ones of the terminal plates (60), and coupled to respective ones of the terminals (130, 140) to electrically connect the rechargeable batteries,
wherein the terminal plates (60) respectively comprise the air layer (80) between a respective one of the insulators (70) and a respective one of the bus bars (300) along a thickness direction of the cap plate (120).

12. The battery module (100) as claimed in claim 11, further comprising a welding nugget (700) between a respective one of the bus bars (300) and a respective one of the terminal plates (60) due to welding, and having a thickness along the thickness direction that is less than or equal to a distance between an upper surface of the respective one of the bus bars (300) and the air layer (80).

13. The battery module (100) as claimed in any of claims 11 to 12, wherein the air layer (80) comprises the penetration hole (81) that penetrates one of the terminal plates (60) and is located closer to a corresponding one of the insulators (70) than a corresponding one of the bus bars (300).
